(19) Europäisches Patentamt
European Patent Office
Office européen des brevets

(11) EP 0 336 633 B1

(12) EUROPEAN PATENT SPECIFICATION

(45) Date of publication and mention of the grant of the patent:
**14.08.1996 Bulletin 1996/33**

(51) Int Cl.$^6$: **C08G 77/44**, C08G 77/20, C08L 83/07, C08L 83/10

(21) Application number: **89303088.2**

(22) Date of filing: **29.03.1989**

# (54) MTQ/polysiloxane hybrid resins, method of making the same, and coating/potting compositions containing the same

MTQ-Polysiloxanharz, Verfahren zur Herstellung und Beschichtungs- oder Einbettungszusammensetzung

Résines de polysiloxane MTQ, procédé pour leur préparation et composition de revêtement ou d'enrobage

(84) Designated Contracting States:
**AT BE CH DE ES FR GB GR IT LI LU NL SE**

(30) Priority: **04.04.1988 US 176892**

(43) Date of publication of application:
**11.10.1989 Bulletin 1989/41**

(73) Proprietor: **LOCTITE CORPORATION**
**Newington, Connecticut 06111 (US)**

(72) Inventor: **Nakos, Steven T.**
**Andover Connecticut 06232 (US)**

(74) Representative: **Marchant, James Ian et al**
**Elkington and Fife**
**Prospect House**
**8 Pembroke Road**
**Sevenoaks, Kent TN13 1XR (GB)**

(56) References cited:
**WO-A-86/00322**
**FR-A- 2 533 933**
**US-A- 4 568 566**
**US-A- 4 585 670**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 336 633 B1

## Description

BACKGROUND OF THE INVENTION

Field Of The Invention

This invention relates generally to curable silicone resins comprising linear diorganosiloxane chains, and to compositions comprising curable silicones useful in conformal coating and potting applications, particularly those in which self-leveling behavior of the composition is required.

Description Of The Related Art

For ease of reference in the ensuing description, the following definitions are applicable to siloxane functional groups as described herein.

As used hereinafter, "M" refers to a monofunctional siloxane unit of the formula:

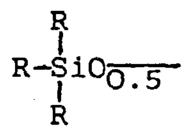 ;

"D" refers to a difunctional siloxane unit of the formula:

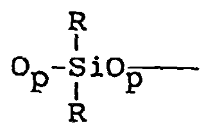 ;

"T" refers to a trifunctional siloxane unit of the formula:

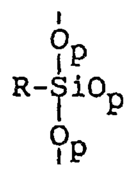 ;

and "Q" is a tetrafunctional siloxane unit of the formula:

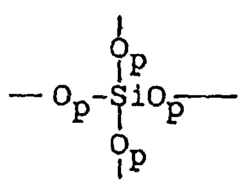 ;

wherein p has a value of 0.5 when the associated oxygen atom is bonded to another silicon atom, and a value of 1 when the associated oxygen atom is bonded to other than a silicon atom, with the proviso that at least one p in each D, T, and Q unit has a value of 0.5.

MQ hydrolyzates and related compounds have been known since the early 1950's and may be prepared by the condensation of sodium silicate and triorganohalosilanes. Such MQ resins with surface trimethylsilyl silane groups are disclosed in U.S. Patent 2,676,182 of W. Daudt, et al., and are usefully employed in pressure-sensitive adhesives. The Daudt et al. patent also discloses MQ resins with other surface groups, such as phenyl and methoxyl.

Later, the hydrolysis of tetraethyl orthosilicate and triorganochlorosilanes was optimized to prepare vinyl MQ resins, of the type disclosed in Nelson U.S. Patent 3,284,406.

U.S. Patent 4,041,010 to E. Jeram describes preparation of MDQ resins by a similar tetraethyl orthosilicate-based synthesis procedure, the resulting MDQ resins containing vinyl groups capable of platinum-catalyzed addition cure with SiH oligomers. Such resins have utility in two-part addition cure RTV silicone compositions.

Tolentino U.S. Patent 4,568,566 discloses an acrylic-functional silicone resin which is curable by either ultraviolet radiation or heating in the presence of a free-radical initiator catalyst. The patent discloses that these resins may be employed in compositions for conformal coatings and in coatings for optical fibers. The silicone resin composition is described at column 4, lines 7-37 of the patent. At column 6, lines 45-56 of this reference, it is disclosed that the

comparative number of M, Q, and T units can vary as necessary to obtain desired properties. For MQ resins, the patent discloses a preferred ratio of M units to Q units from 1:1 to 3:1. MT resins preferably employ a ratio of M units to Q units of from 0.5:1 to 2:1. MTQ resins are disclosed as having a ratio of M units to T units from 0.5:1 to 2:1, and a ratio of M units to Q units of from 0.5:1 to 3:1.

Self-leveling silicones, i.e., formulations comprising polysiloxanes which flow into or onto a part and form level pools of the resinous material, are broadly used in a number of conformal coating and potting applications.

UV curable self-leveling silicone compositions, based on methacryl-terminated liquid silicones and containing fumed silica filler, are known. Such compositions, while highly useful in conformal coating and potting applications, suffer the deficiency that only low levels of fumed silica filler, e.g., on the order of about 5 percent or less by weight, may be employed. Accordingly, the cured properties of such silica-filled compositions may for example be on the order of the following: tensile strength 689.5 kPa (100 psi); elongation, 85 percent; tear strength, 1.4 N/mm (8 pli); and Shore A hardness, 31. These illustrative values are based on a methyacryl-terminated liquid silicone having about 5 percent of fumed silica filler therein, with an uncured viscosity in the range of about 4.5-6.5 Pas (4500-6500 centipoise).

While the fumed silica filler is efficacious in improving the cured properties of the above described composition containing same, beyond that achievable in the absence of such filler, the use of silica in amounts above about 5 percent by weight (based on the weight of the silicone material), while improving the physical properties of the cured composition, also converts it into a non-flowable grease. Such non-flowable character renders the filled silicone useless for its intended application as a flowable, self-leveling coating or potting material.

The foregoing limitation on filler content is particularly disadvantageous for potting applications which require a flowable material whose cured properties (tensile shear strength, elongation, tear strength, Shore A hardness) substantially exceed the values set forth above for the illustrative silica-filled silicone composition. Examples of such potting applications include potting of electrical and/or mechanical components in housings, such as solenoids, variable resistors, capacitors, etc.

It therefore would be a significant advance in the art to provide a silicone resin composition for conformal coating and potting applications, which provides superior cured properties for tensile shear strength, elongation, tear strength and Shore A hardness, but which does not have a viscosity so high as to preclude flowability and self-leveling behaviour of the composition.

Accordingly, it is an object of the present invention to provide a silicone resin composition providing good flow and self-leveling behaviour in conformal coating and potting applications, with superior physical properties for the cured composition.

Other objects and advantages of the invention will be more fully apparent from the ensuing disclosure and appended claims.

## SUMMARY OF THE INVENTION

The present invention provides a hybrid polysiloxane comprising:

(I) a multifunctional cross-linked MTQ moiety having pendant hydroxy groups comprising
monofunctional siloxane units (M)

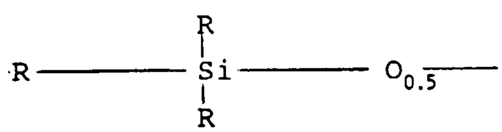

trifuncational siloxane units (T)

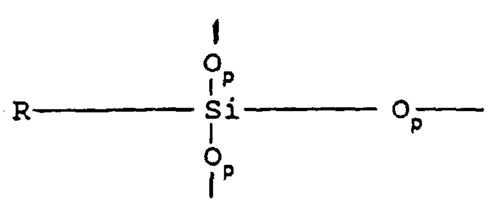

tetrafunctional siloxane units (Q)

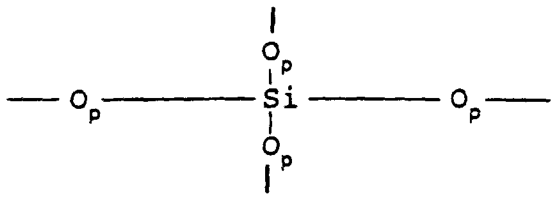

wherein:

p has a value of 0.5 when the associated oxygen atom is bonded to another silicon atom, and a value of 1 when the associated oxygen atom is bonded to other than a silicon atom, with the proviso that at least one p in each T and Q unit has a value of 0.5;
each R is independently alkyl, aryl, alkaryl, aralkyl, haloalkyl, (meth)acryloxyalkyl or (meth)acryloxyalkenyl;
the concentration ratio of M units to the sum of T and Q units, M/(T+Q), in the cross-linked MTQ moiety is from about 0.55 to 0.75;
more than one of the pendant hydroxyl groups having covalently bonded thereto

(II) a diorganosiloxane polymer of the formula:

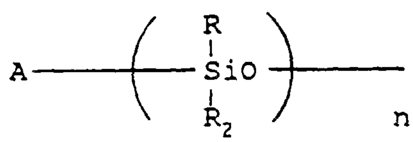

wherein:

A is an acrylic-functional end group joined to the rest of the molecule via alkylene or alkenylene;
$R_1$ and $R_2$ are each independently alkyl, aryl, alkaryl, aralkyl, haloalkyl, (meth)acryloxyalkyl, and (meth)acryloxyalkenyl; and
n is from 2 to 1000.

The molar concentration ratio of M units to the sum of T and Q units, M/(T+Q), in the polysiloxane moiety is preferably from 0.60 to 0.70, and most preferably substantially about 0.67.

The acrylic-functional MTQ/silicone hybrid resins of the present invention thus provide an ultraviolet (UV) radiation curable silicone composition which is comprised of linear polydiorganosiloxane chains bonded to an MTQ moiety.

The MTQ portion of the MTQ/polysiloxane hybrid may for example comprise silicate units, (meth)acrylate-containing trifunctional siloxane units, and trialkylsiloxane units, forming a cross-linked polysilane/MTQ resin having pendant hydroxy and (meth)acrylic functionality. The linear polydiroganosiloxane chain portions of the MTQ/polysiloxane hybrid are generally of the formula:

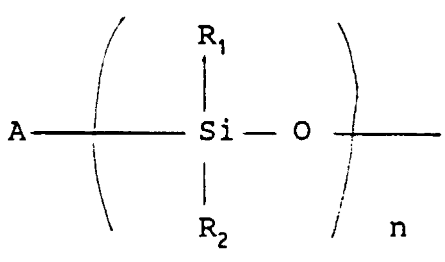

wherein n is 2 to 1000, and the organic substituents $R_1$ and $R_2$ of the silicon atoms in the linear polydiorganosiloxane chains may independently be selected from alkyl, aryl, alkaryl, aralkyl, haloalkyl, (meth)acryloxyalkyl, and (meth(meth) acryloxyalkenyl substituents. Preferably these substituents are alkyl radicals, most preferably methyl. The A group is an acrylic functional end group, such as for example (meth) acryloxyalkyl or (meth) acryloxyalkenyl, joined to the rest of the molecule via alkyl or alkenyl.

The MTQ/silicone hybrid resins of the present invention, which may suitably be formed by a process which comprises a) forming a linear polyorganosiloxane having acrylic and chloro end groups, (b) hydrolysing a tetralkyl orthosilicate (e.g.) tetraethyl orthosilicate), an acrylic functional trialkoxysilane (e.g. methacryloxypropyltrimethoxysilane) and a chlorotrialkylsilane (e.g. chlorotrimethylsilane) to from anMTQ resin with silanol functionality, c) reacting said linear polyorgano-siloxane with said MTQ resin to form a hybrid resin; and have utility as reinforced silicone rubber

precursors, which as a result of their acrylic functionality cure readily by UV radiation, in the presence of a suitable photoinitiator. These hybrid resins may be usefully employed in potting/conformal coatings applications requiring a self-levelling silicone composition, and do not require the addition of any polydiorganosiloxanes or other silicone materials thereto in order to achieve utility in such application.

As indicated above, the MTQ/silicone hybrid resins of the invention are capable of ultraviolet radiation cure when mixed with a suitable photoinitiator. For example, the hybrid polysiloxane resin may be UV cured with a photoinitiator such as alpha, alpha-diethoxyacetophenone.

The MTQ/silicone hybrid resins of the invention, when cured, possess bulk physical properties which are significantly better than the corresponding unmodified, linear silicones, and which approach the properties attainable using particulate silica as a filler in the corresponding linear silicones.

Further, the MTQ moiety of the MTQ/silicone hybrid resin provides reinforcement of the resin without undue viscosity build-up, such as results from the use of silica fillers in linear silicone formulations. As previously described, the use of silica in any appreciable quantity significantly increases the viscosity of the linear silicone and transforms it into a grease-like material which is not flowable or self-leveling in character.

The typical viscosities of MTQ/linear silicone resins of the present invention may range from 10 to 50 Pas (10,000 to 50,000 centipoise).

The resins of the present invention consist of two basic portions. The linear silicone portion contains an acrylic functional end group, e.g., an acrylate or methacrylate group, bonded via alkylene or alkenylene to one end of a linear polysiloxane. Preferred acrylic functional end groups include those of the formula:

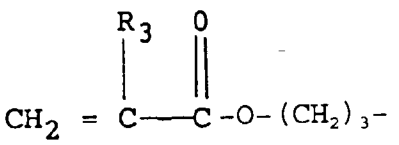

;

and

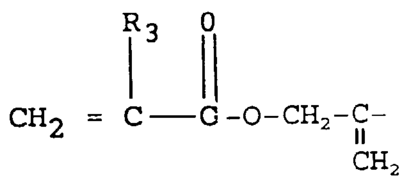

wherein

$R_3$ may be H or alkyl.

The MTQ portion of the hybrid MTQ/silicone resin of the invention may for example be formed as a hydrolysate of tetraethyl orthosilicate, methacryloxypropyltrimethoxysilane and chlorotrimethylsilane. Its molecular weight may range from 1000 to 10,000 grams per mole. The mole ratio of M(monofunctional) units to the sum of T(trifunctional) units and Q(tetrafunctional) units for this illustrative MTQ moiety may suitably range from 0.60 to 0.70. The methacrylate concentration may range from 2-25 mole% (0.28 meq/gm-2.54 meq/gm) and preferably from 0.60 meq/g (4.4 mole %) to 1.4 meq/g (11.5 mole %). Acryloxypropenyltrimethoxysilane may be used in place of methacryloxypropyltrimethoxysilane.

Other formulation components, such as fillers, adhesion promotors, non-reactive diluents, reactive diluents such as di(meth)acrylate-terminated silicones, antioxidants, and stabilizers may be utilized as desired with such MTQ/silicone hybrid resins.

The MTQ resin portion of the hybrid resin, as indicated, may be formed by hydrolysis of tetraethyl orthosilicate (TEOS), methacryloxypropyltrimethoxysilane, and chlorotrimethylsilane, and this hydrolysis may suitably be carried out in an aqueous solvent medium at a temperature on the order of about 70°C. The aqueous solvent medium may for example be a mixture of water and toluene.

The resulting MTQ resin product has a plurality of silanol functional groups. The concentration of such groups may for example be on the order of from 0.8 to 1.0 meq SiOH/gram of the resin product.

The linear silicone portion of the MTQ/silicone hybrid resin may be synthesized using as a starting material a hydroxy-terminated linear polydiorganosiloxane. A particularly suitable material of such type is RP48V3500 silicone fluid, having a molecular weight of about 28,000, and commercially available from Rhone-Poulenc S.A., Lyon, France.

The linear silicone starting material may then be reacted with suitable chlorosilyl acrylate compound, e.g., acryloxypropenyldimethylchlorosilane, in the presence of a tertiary amine, such as triethylamine containing 1 percent by weight, based on the weight of the solution, of 4-dimethylaminopyridine (DMAP), to yield the corresponding monoacrylated

linear silicone. The silicone monoacrylate then may be reacted with an excess of dimethyldichlorosilane in the presence of the DMAP-containing triethylamine solution to form the corresponding acrylated linear silicone having a chlorosilane end group functionality. This chlorinated linear silicone may then be reacted with the MTQ resin, formed as previously described, to yield the MTQ/silicone hybrid resin of the invention. The reaction of the MTQ resin with the linear silicone may be carried out to react a substantial major portion, e.g., 95%, of the TQ hydroxyl groups in the MTQ resin, thereby joining the polydiorganosiloxane chains with the terminal oxo groups derived from the hydroxyl functionalities of the T and Q units in the precursor MTQ resins.

The resulting MTQ/silicone hybrid resin comprises acrylic functional groups in sufficient quantity relative to the number of silanol groups present to render the hybrid resin self-curable by exposure to UV radiation in the presence of a suitable photoinitiator.

The product MTQ/silicone hybrid resin may thus be employed for conformal coating and potting applications, in admixture with a suitable photoinitiator such as alpha, alpha-diethylacetophenone (DEAP).

The ultraviolet radiation curing conditions may be varied widely, depending on the depth of the resin film and the specific composition of the MTQ/silicone hybrid resin, as will be appreciated by those skilled in the art. By way of specific example, an MTQ/silicone hybrid resin of the above-described type, wherein the linear silicone moiety is a linear polydimethysiloxane, and the hybrid resin has a viscosity on the order of about 30 Pas (30,000 centipoise), may be cured at depths of resin on the order of 70 mils, by exposure to UV radiation from a 254 nm high pressure mercury lamp having an intensity of 70 milliwatts per square centimeter, for about 60 seconds.

The MTQ/silicone hybrid resins of the invention exhibit greatly improved tensile shear strength, tear strength, and Shore A hardness over corresponding (meth)acrylate-terminated linear silicones. Typical MTQ/silicone resins of the invention may exhibit cured properties of tensile shear strength approaching 3446.6 kPa (500 psi), tear strength of 5.25-6.13 N/mm (30-35 pli), Shore A hardness in the vicinity of 50, and elongation in the vicinity of 100 percent.

The features of the present invention are more fully shown with respect to the following non-limiting examples, wherein all parts and percentages are by weight, unless otherwise expressly stated.

In the ensuing examples, all reagents were used directly unless otherwise specified. Viscosities were measured on a Brookfield RVT viscometer with RV5 spindle. Percent hexane extractables were performed on weighed cured films by Sohxlet refluxing for 24 hours, then drying at 60°C and 1 mm pressure for 5 hours and reweighing. Percent solids of the MTQ solutions were found by drying a known weight of solution at 130°C and 1 mm pressure for 1 hour, then reweighing.

## EXAMPLE I

### Preparation of MTQ Resin

The base MTQ resin was prepared by reaction of trimethylchlorosilane, tetraethyl orthosilicate, and methacryloxypropyltrimethoxysilane, according to the reaction scheme as described below.

Into a three liter, 4-necked Morton Flask fitted with condenser, thermometer, mechanical stirrer, and constant pressure addition funnel were added 520.82g (2.50 moles) tetraethyl orthosilicate, 147.80g (0.595 mole) methacryloxypropyltrimethoxysilane, 225.55g (2.075 moles) chlorotrimethylsilane and 290 ml toluene. Water (deionized, 400ml, 22.2 moles) was added dropwise, allowing the temperature of the rapidly stirred mixture to rise to 60°C. This temperature was maintained with external cooling. The reaction mixture was stirred 2 hours at 70°C after the addition. Water (400ml) was added to the stirred mixture, which then was allowed to phase. The lower product layer was separated and subjected to distillation, removing about 250ml distillates (water, methanol, ethanol, and toluene) and periodically replacing lost volume with toluene in 50 ml increments during the course of the distillation. The distillation was terminated when the overhead temperature reached 105°C. The crude product solution was stirred about 10 minutes with 50g of 20% Fullers earth in Celite 545 and filtered over a Celite 545 bed. The combined filtrates were stripped briefly on a rotary evaporator, removing about 50ml toluene, giving 602.2g of a light yellow, mobile solution containing 66.5% solids.

The ratio M/(T+Q) for the product resin was 0.67, and this resin contained 11.5 mole % methacrylate, 0.66 meq total OH/gm solution, 0.942 meq SiOH/g solid, and 308 ppm $H_2O$.

## EXAMPLE II

### Preparation of MTQ/Silicone Hybrid Resin

Into a 300ml 3-necked flask equipped with mechanical stirrer, thermometer, and nitrogen blanket were placed 80.0g ($7.42 \times 10^{-3}$ eq total OH) RP48V3500 silicone fluid (Rhone-Poulenc S.A.), 1.50g (0.014g eq amine) of a solution of 1% 4-dimethylaminopyridine (DMAP) in triethylamine, and 0.76g ($3.71 \times 10^{-3}$ mole) of acryloxypropenyldimethylchlorosilane. The contents were heated to 70°C under a nitrogen blanket with stirring to form the monoacrylate intermediate. After one hour at 70°C, 2.95 g (0.0229 mole) dichlorodimethylsilane were added, with continued stirring thereafter for one additional hour at 70°C. Added in succession were 63.75 g (69.8% solids, 0.918 meq SiOH/g solid, and 484 ppm water) MTQ resin, prepared in accordance with the procedure of Example I, and 4.00 g (0.0396 mole as triethylamine) of the above-described 4-DMAP/triethylamine solution. When the addition was complete, the reaction mixture was aged for three hours at 70°C. Methanol (7 g) was added, stirring for 10 minutes at 70°C. The reaction mixture was stripped on a rotary evaporator for one hour at 70°C and 0.5 mm. After redilution with an equal volume of hexane, salts were removed by filtration through a Celite 545 bed. The filtrate was stripped as before, giving 110 g of a cloudy liquid. The product, having a viscosity of 29.4 Pas (29,400 cps) (RV5 Brookfield, 5 rpm), was mixed with 2.24 g of alpha, alpha-diethoxyacetophenone (DEAP), to produce a UV-curable composition.

EXAMPLE III

UV Curing of MTQ/Silicone Hybrid Resin

The MTQ/silicone hybrid resin product of Example II containing 2% DEAP was cast between polyethylene-backed 15.2 cm (6") square glass plates with a 70 mil by 15.2 cm (6") square outer dimension by 13.9 cm (5-1/2") square inner dimension Teflon® spacer. The clamped assembly was placed in a Technocure® high pressure mercury vapor lamp UV curing chamber and irradiated 60 seconds per specimen side at an intensity of 70 milliwatts per square centimeter. After cooling, the cured specimen was peeled free of the plates and cut into tensile and tear test specimens according to ASTM method D412. For comparison, a corresponding unfilled diacrylate-terminated silicone containing 2% DEAP was prepared and was similarly UV radiation cured. The following bulk properties were obtained for the respective specimens:

| Cured MTQ/Silicone | | Cured Diacrylate Silicone |
|---|---|---|
| Tensile: | 3378.4 kPa (490 psi) | 206.8 kPa (30 psi) |
| Elongation: | 106% | 150% |
| Tear: | 5.95 N/mm (34 pli) | 0.86 N/mm (5 pli) |
| Shore A: | 54 | <5 |

The MTQ/silicone hybrid resin thus exhibited greatly improved tensile, tear, and Shore A properties over the unfilled diacrylate-terminated silicone.

EXAMPLE IV

In this example, a statistical approach was utilized to optimize MTQ/silicone hybrid resins of the present invention.

The MTQ/silicone hybrid resin synthesis procedure entails a large number of component variables. Parameters such as M:Q ratio, percent capping of linear silanol with acrylate-functional groups, and percent reaction of MTQ OH functional groups are typical examples, and strongly influence synthesis capability. Efforts were therefore focused on two parameters that were amenable to variation: percent MTQ solids and MTQ acrylate/methacrylate concentration.

The following property trends were anticipated: (i) reinforcement should be minimal with low solids and/or low acrylic concentration, giving low tensile shear strength, tear strength and Shore A hardness with high elongation; (ii) a high acrylic level may lead to over-crosslinking, evidenced by low elongation and tear strength; and (iii) high MTQ solids may give good cured properties, but could cause high uncured viscosity.

Based on the above, a seven point $2^p$ factorial study was carried out, varying MTQ solids from 20% to 50%. The acrylic functionality concentration of the MTQ base resin was varied from 4.4 mole % methacrylate to 11.5 mole % methacrylate (0.60 meq/g to 1.40 meq/g). Seven MTQ/silicone hybrid resins (Samples 1-7) were then prepared according to the reaction scheme of Example II, adjusting reagents as required for the type and amount of MTQ resin, generally following the synthesis procedure set forth in Example II. Each hybrid resin, containing DEAP (2%) was UV cured as previously described, and then analyzed for bulk properties, the values of which are set out in Table I below.

TABLE I

| Sample | Tensile kPa (psi) | Elongation (%) | Tear N/mm (pli) | Shore A |
|---|---|---|---|---|
| 1 | 744.6 (108) | 161 | 1.75 (10) | 20 |
| 2 | 4240.3 (615) | 115 | 13.48 (77) | 65 |
| 3 | 2123.6 (308) | 136 | 2.45 (14) | 36 |

TABLE I (continued)

| Sample | Tensile kPa (psi) | Elongation (%) | Tear N/mm (pli) | Shore A |
|---|---|---|---|---|
| 4 | 3964.5 (575) | 39 | 8.41 (48) | 73 |
| 5 | 3543.9 (514) | 124 | 5.95 (34) | 47 |
| 6 | 3688.7 (535) | 155 | 4.55 (26) | 44 |
| 7 | 3330.2 (483) | 112 | 5.25 (30) | 50 |

The weight percent solids of the MTQ moiety in the hybrid resin, the concentration of methacrylate in the MTQ morety and the total methacrylate/acrylate in the hybrid resin are set out below in Table II.

TABLE II

| Sample | MTQ % Solids | [MA] on MTQ meq/g | Final [MA/Acr], meq/g |
|---|---|---|---|
| 1 | 20 | 0.60 | 0.16 |
| 2 | 50 | 0.60 | 0.32 |
| 3 | 20 | 1.40 | 0.32 |
| 4 | 50 | 1.40 | 0.72 |
| 5 | 35 | 1.00 | 0.38 |
| 6 | 35 | 1.00 | 0.38 |
| 7 | 35 | 1.00 | 0.38 |

Based on a 2p factorial data analysis, the following physical property equations were derived:

$$\text{Tensile (kPa) (psi)} = -500 + 22.9y1 + 450y2 - 10y1y2$$

$$\text{Elongation (\%)} = 184.8 - 0.3y1 + 11.5y2 - 2.1y1y2$$

$$\text{Tear (N/mm) (pli)} = -53.8 + 3.1y1 + 32.3y2 - 1.4y1y2$$

$$\text{Shore A} = -26 + 1.7y1 + 26.7y2 - 0.33y1y2$$

By inserting % solids for y1 and acrylic concentration of the MTQ for y2, these properties may be predicted. Also, simultaneous solutions are possible, allowing calculation of y1 and y2 for an expected set of properties. One may then run the experiment based on calculated y1 and y2 values, obtain bulk properties, and check their values against the expected results.

The data in Table I showed that both higher solids and higher acrylic levels increased tensile shear strength and Shore A hardness and decreased elongation, as predicted. Tear strength benefitted mostly from higher solids. Higher order (y1, y2) interactions were significant contributors in all cases. The tensile shear strength, tear strength, and Shore A hardness data plots indicated slight curvature (non-linearity) near the center while elongation appeared linear throughout its array.

Uncured viscosities of the hybrid resins were also very high in this example. All samples except the high methacrylate level Samples 3 and 4 were clear, but near gels of very high viscosity. Samples 3 and 4 were slightly cloudy and had viscosities of 43.5 and 135 Pas (43,500 cps and 136,000 cps), respectively.

Based on the data generated in this example, it was concluded that 35% solids levels give good reinforcement without objectionable viscosity or incompatibility, and that MTQ resins with acrylic concentrations below 0.38 meq/gm do not yield hybrid resins with a desired high reinforcement character.

## EXAMPLE V

In this example, MTQ/silicone hybrid resin samples (Sample 8-10) having the solids levels and methacrylate concentrations set out in Table III below were prepared by the procedure of Example II.

TABLE III

| Sample | % MTQ Solids | [MA] on MTQ, meq/g | Final [MA/Acr] meq/g |
|---|---|---|---|
| 8 | 35 | 1.00 | 0.38 |
| 9 | 35 | 1.20 | 0.45 |

TABLE III (continued)

| Sample | % MTQ Solids | [MA] on MTQ, meq/g | Final [MA/Acr] meq/g |
|---|---|---|---|
| 10 | 35 | 1.40 | 0.52 |

To optimize viscosities, 5 weight percent methanol was added to the hybrid resin after MTQ coupling, followed by heating of the resin for one hour at 70°C before filtering of the product hybrid resin. The product hybrid resin was mixed with DEAP (2%) and UV cured as previously described.

The bulk physical properties of the cured resins were then determined, as listed in Table IV below.

TABLE IV

| Property | Sample 8 | Sample 9 | Sample 10 |
|---|---|---|---|
| Tensile kPa (psi) | 2826.8(410) | 3571.5(518) | 4212.7(611) |
| Elongation (%) | 131 | 154 | 115 |
| Tear N/mm (pli) | 3.85(22) | 5.25(30) | 5.95(34) |
| Shore A | 42 | 42 | 58 |
| Uncured Viscosity Pas (cps) | 46(46,000) | 25(25,000) | 29.4(29,400) |
| Hydrolyzable Chloride (ppm) | 3 | 3 | 1 |
| % Hexane Extractables | 7.6 | 6.8 | 5.1 |
| Appearance | Hazy | Cloudy | Cloudiest |

Sample 9 thus gave the best bulk physical properties of the three samples comparatively tested in this example, with low hydrolyzable chloride and acceptable extractables and viscosity. Compatibility appeared unchanged after one month.

The Sample 9 ultraviolet radiation cured MTQ hybrid resin had 3571.5 kPa (518 psi) tensile shear strength, 154% elongation, 5.25 N/mm (30 pli) tear strength, 42 Shore A hardness, and uncured viscosity of 25 Pas (25,000 cps).

The MTQ/silicone hybrid resins of the present invention show greatly improved cured physical properties over unreinforced silicones and are comparable to commercially available MQ-reinforced formulations. Also, the bulk physical properties of such cured MTQ/silicone hybrid resins are much improved over silica-filled self-leveling formulations.

The optimum MTQ/silicone hybrid resins contain 35% of a 1.2 meq methacrylate per gram MTQ resin, grafted onto an idealized monoacrylate 28,000 MW silanol-terminated linear silicone. Adding methanol after the MTQ capping step removed residual chlorosilyl groups capable of crosslinking, resulting in lower viscosity products with a shelf life exceeding one month.

## Claims

**1.** A hybrid polysiloxane comprising:

(I) a multifunctional cross-linked MTQ moiety having pendant hydroxyl groups and comprising monofunctional siloxane units (M)

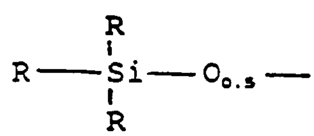

trifunctional siloxane units (T)

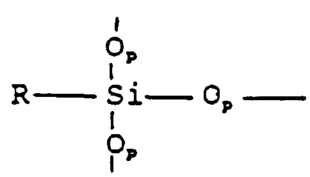

tetrafunctional siloxane units (Q)

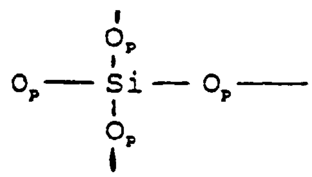

wherein:

p has a value of 0.5 when the associated oxygen atom is bonded to another silicon atom, and a value of 1 when the associated oxygen atom is bonded to other than a silicon atom, with the proviso that at least one p in each T and Q unit has a value of 0.5;
each R is independently alkyl, aryl, alkaryl, aralkyl, haloalkyl, (meth)acryloxyalkyl or (meth)acryloxyalkenyl; and
the concentration ratio of M units to the sum of T and Q units, M/(T+Q), in the cross-linked MTQ moiety is from 0.55 to 0.75;
more than one of the pendant hydroxyl groups having covalently bonded thereto

(II) a diorganosiloxane polymer of the formula:

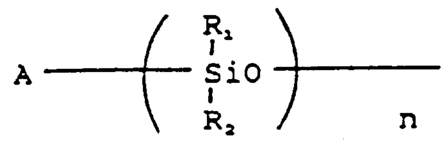

wherein:

A is an acrylic functional end group joined to the rest of the molecule via alkylene or alkenylene;
$R_1$ and $R_2$ are each independently alkyl, aryl, alkaryl, aralkyl, haloakyl, (meth)acryloxyalkyl or (meth)acryloxyalkenyl; and
n is from 2 to 1000.

2. A hybrid polysiloxane according to claim 1, wherein A is (meth)acryloxyalkyl or (meth)acryloxyalkenyl.

3. A hybrid polysiloxane according to claim 1, wherein A is

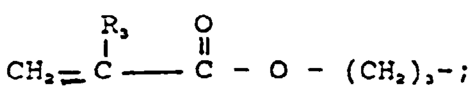 or 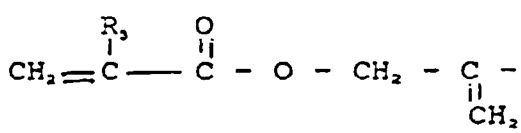

wherein $R_3$ is H or alkyl.

4. A hybrid polysiloxane according to any of claims 1 to 3, wherein M/(T+Q) is from 0.60 to 0.70.

5. A hybrid polysiloxane according to any of claims 1 to 4, wherein the MTQ resin contains from 0.28 to 2.54 meq/g acrylic functionality.

6. A hybrid polysiloxane according to claim 5 wherein the MTQ resin contains from 0.60 to 1.4 meq/g acrylic functionality.

7. A hybrid polysiloxane according to any of claims 1 to 6 wherein $R_1$ and $R_2$ are both methyl.

8. A UV curable composition comprising a hybrid polysiloxane according to any of claims 1 to 7 and a UV photoinitiator.

9. A process for making a hybrid polysiloxane as claimed in any of claims 1 to 7 which comprises the steps of:

(a) forming linear polydiorganosiloxane having acrylic and chloro end groups;
(b) hydrolysing a tetraalkyl orthosilicate, and acrylic functional trialkoxysilane, and a chlorotrialkylsilane to form an MTQ resin with silanol functionality; and

(c) reacting said linear polydiorganosiloxane with said MTQ resin to form a hybrid polysiloxane.

## Patentansprüche

**1.** Hybrid-Polysiloxan, umfassend:

(I) eine multifunktionelle vernetzte MTQ-Gruppierung, die angehängte Hydroxylgruppen aufweist und monofunktionelle Siloxan-Einheiten (M)

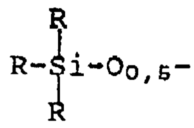

trifunktionelle Siloxan-Einheiten (T)

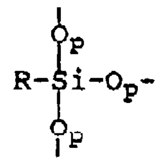

tetrafunktionelle Siloxan-Einheiten (Q)

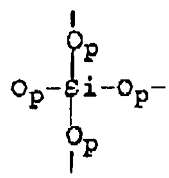

umfaßt, worin

p einen Wert von 0,5 besitzt, wenn das assoziierte Sauerstoffatom an ein anderes Siliciumatom gebunden ist und einen Wert von 1 besitzt, wenn das assoziierte Sauerstoff an etwas anderes als an ein Siliciumatom gebunden ist, mit der Maßgabe, daß wenigstens in p in jeder T- und Q-Einheit einen Wert von 0,5 besitzt;
jedes R unabhängig für Alkyl, Aryl, Alkaryl, Aralkyl, Halogenalkyl, (Meth)acryloxyalkyl oder (Meth)acryloxyalkenyl steht; und
das Konzentrationsverhältnis der M-Einheiten zu der Summe der T- und Q-Einheiten, M/(T+Q), in der vernetzten MTQ-Gruppierung 0,55 bis 0,75 beträgt;
ein im wesentlichen größerer Teil der angehängten Hydroxylgruppen daran kovalent gebunden aufweist

(II) ein Diorganosiloxan-Polymer der Formel:

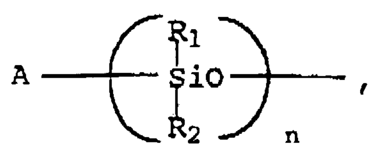

worin:

A für eine acrylfunktionelle Endgruppe steht, die mit dem Rest des Moleküls über Alkyl oder Alkenyl verbunden ist;
$R_1$ und $R_2$ jeweils unabhängig für Alkyl, Aryl, Alkaryl, Aralkyl, Halogenalkyl, (Meth)acryloxyalkyi oder (Meth)acryloxyalkenyl stehen; und
n für eine Zahl von 2 bis 1 000 steht.

**2.** Hybrid-Polysiloxan nach Anspruch 1, worin A für (Meth)acryloxyalkyl oder (Meth)acryloxyalkenyl steht.

**3.** Hybrid-Polysiloxan nach Anspruch 1, worin A für

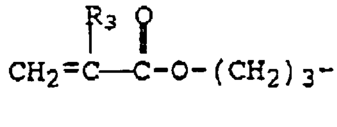 oder 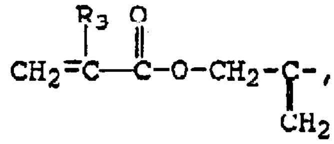,

steht, worin $R_3$ für H oder Alkyl steht.

**4.** Hybrid-Polysiloxan nach einem der Ansprüche 1 bis 3, worin M/(T+Q) 0,60 bis 0,70 beträgt.

**5.** Hybrid-Polysiloxan nach einem der Ansprüche 1 bis 4, worin das MTQ-Harz 0,28 bis 2,54 meq/g Acrylfunktionalität enthält.

**6.** Hybrid-Polysiloxan nach Anspruch 5, worin das MTQ-Harz 0,60 bis 1,4 meq/g Acrylfunktionalität enthält.

**7.** Hybrid-Polysiloxan nach einem der Ansprüche 1 bis 6, worin $R_1$ und $R_2$ beide für Methyl stehen.

**8.** UV-härtbare Zusammensetzung, die ein Hybrid-Polysiloxan nach einem der Ansprüche 1 bis 7 und einen UV-Photostarter umfaßt.

**9.** Verfahren zur Herstellung eines Hybrid-Polysiloxans nach einem der Ansprüche 1 bis 7, welches die Stufen umfaßt:

(a) Bilden eines linearen Polydiorganosiloxans, das Acryl- und Chlor-Endgruppen aufweist;
(b) Hydrolyse eines Tetraalkylorthosilicates und eines acrylfunktionellen Trialkoxysilans und eines Chlortrialkylsilans unter Bildung eines MTO-Harzes mit Silanol-Funktionalität; und
(c) Umsetzen des linearen Polydiorganosiloxans mit dem MTQ-Harz unter Bildung eines Hybrid-Polysiloxans.

**Revendications**

**1.** Un polysiloxane hybride comprenant :

(I) un fragment MTQ réticulé polyfonctionnel ayant des groupes hydroxyle latéraux et comprenant des motifs siloxane monofonctionnels (M)

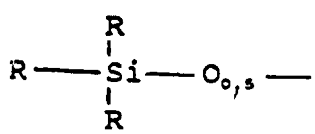

des motifs siloxane trifonctionnels (T)

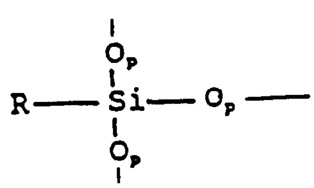

des motifs siloxane tétrafonctionnels (Q)

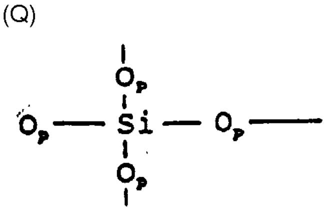

où :

la valeur de p est 0,5 lorsque l'atome d'oxygène associé est lié à un autre atome de silicium, et 1 lorsque

l'atome d'oxygène associé est lié à autre chose qu'un atome de silicium, avec la condition qu'au moins un p de chaque motif T et Q ait la valeur 0,5 ;
chaque R est indépendamment un groupe alkyle, aryle, alkaryle, aralkyle, halogénoalkyle, (méth) acryloxyalkyle ou (méth)acryloxyalcényle; et
le rapport de concentration des motifs M à la somme des motifs T et Q, M/(T+Q), dans le fragment MTQ réticulé, est compris entre 0,55 et 0,75 ;

à une portion majeure substantielle des groupes hydroxyle latéraux étant lié par covalence
(II) un polymère de diorganosiloxane de la formule :

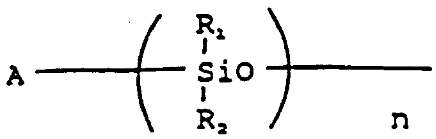

où :

A est un groupe terminal fonctionnel acrylique relié au reste de la molécule par un groupe alkyle ou alcényle ;
$R_1$ et $R_2$ sont chacun indépendamment un groupe alkyle, aryle, alkaryle, aralkyle, halogénoalkyle, (méth) acryloxyalkyle ou (méth)acryloxyalcényle ; et
n est de 2 à 1000.

2. Un polysiloxane hybride selon la revendication 1, dans lequel A est un groupe (méth)acryloxyalkyle ou (méth) acryloxyalcényle.

3. Un polysiloxane hybride selon la revendication 1, dans laquelle A est

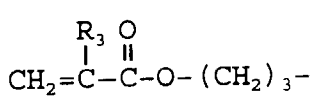 ou 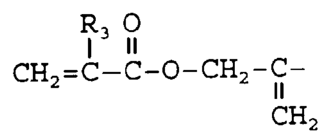

où $R_3$ est H ou un groupe alkyle.

4. Un polysiloxane hybride selon l'une quelconque des revendications 1 à 3, dans lequel M/(T+Q) est de 0,60 à 0,70.

5. Un polysiloxane hybride selon l'une quelconque des revendications 1 à 4, dans lequel la résine MTQ contient 0,28 à 2,54 méq/g de fonctionnalité acrylique.

6. Un polysiloxane hybride selon la revendication 5, dans lequel la résine MTQ contient 0,60 à 1,4 méq/g de fonctionnalité acrylique.

7. Un polysiloxane hybride selon l'une quelconque des revendications 1 à 6, dans lequel $R_1$ et $R_2$ sont tous deux un groupe méthyle.

8. Une composition durcissable par irradiation UV comprenant un polysiloxane hybride selon l'une quelconque des revendications 1 à 7 et un photo-initiateur pour irradiation UV.

9. Un procédé pour préparer un polysiloxane hybride tel que revendiqué dans l'une quelconque des revendications 1 à 7, qui comprend les étapes suivantes :

(a) former un polydiorganosiloxane linéaire ayant des groupes terminaux acrylique et chloro ;
(b) hydrolyser un orthosilicate de tétra-alkyle et un trialcoxysilane à fonction acrylique et un chlorotrialkylsilane pour former une résine MTQ à fonctionnalité silanol ; et
(c) faire réagir ledit polydiorganosiloxane linéaire avec ladite résine MTQ pour former un polysiloxane hybride.